# EUROPÄISCHE PATENTSCHRIFT

(11) **EP 2 930 195 B1**
(45) Veröffentlichungstag und Bekanntmachung des Hinweises auf die Patenterteilung: **01.02.2017**
(21) Anmeldenummer: 14164347.8
(22) Anmeldetag: 11.04.2014
(51) Int. Cl.: C08G 12/00

(54) **BINDEMITTELZUSAMMENSETZUNG FÜR FASERHALTIGE PLATTEN UND EIN VERFAHREN ZU DESSEN HERSTELLUNG**
ADHESIVE COMPOSITION FOR PANELS CONTAINING FIBRES AND A METHOD FOR THE PRODUCTION THEREOF
COMPOSITION DE LIANT POUR PLAQUES CONTENANT DES FIBRES ET SON PROCÉDÉ DE FABRICATION

(43) Veröffentlichungstag der Anmeldung: 14.10.2015
(73) Patentinhaber: SWISS KRONO Tec AG, 6004 Luzern (CH)
(72) Erfinder: Dr. Kalwa, Norbert, 32805 Horn-Bad Meinberg (DE); Pfeiffer, Sabrina, 16866 Kyritz (DE)
(74) Vertreter: Maikowski & Ninnemann Patentanwälte Partnerschaft mbB

(56) Entgegenhaltungen:
- DE-A1- 3 943 488
- GB-A- 2 191 207
- US-A- 1 949 831
- US-A- 4 339 361

## Beschreibung

Die vorliegende Erfindung betrifft eine neuartige Bindemittelzusammensetzung gemäß Anspruch 1, die Verwendung der Bindemittelzusammensetzung gemäß Anspruch 11 und ein Verfahren zur Herstellung der Bindemittelzusammensetzung gemäß Anspruch 12.

### Beschreibung

Holzwerkstoffe (HWS), wie zum Beispiel Holzwerkstoffplatten, werden seit Jahrzehnten mit Bindemitteln auf Basis von Duroplasten als Bindemittel hergestellt. Die dabei am häufigsten zum Einsatz kommenden duroplastischen Bindemittel basieren auf Formaldehydharzen, wie zum Beispiel Harnstoff-Formaldehyd-Harzen, Melamin-Harnstoff-Formaldehyd-Harzen und Phenol-Formaldehyd-Harzen.

Die formaldehydhaltigen Harze werden durch eine Kombination aus Additions- und Kondensationsreaktionen von Formaldehyd mit den anderen Komponenten (Harnstoff, Melamin, Phenol) hergestellt. Die durch die genannten Polymerisationsreaktionen gebildeten Leime enthalten in der Regel Gemische aus Monomeren, Oligomeren und Polymeren.

Die genannten formaldehydhaltigen Harze bzw. Leime werden bei der Herstellung von Holzwerkstoffen mit Holzpartikeln oder Holzfasern vermischt und in Etagen- oder kontinuierlichen Pressen (Contipressen) unter Druck und Temperatur ausgehärtet. Aufgrund der während des Pressvorganges herrschenden Bedingungen, wie erhöhte Temperatur, pH-Wert, Feuchte und Ähnlichem, kann es jedoch zu einer Aufspaltung der verwendeten Harze in ihre entsprechenden Ausgangsverbindungen kommen. Dies gilt vor allem für formaldehydhaltige Leime bzw. Harze auf der Basis von Harnstoff und Harnstoff-Melamin. Entsprechend kommt es bei der genannten Rückspaltung der Harze zur Freisetzung von Formaldehyd, welcher allerdings als krebserregend angesehen wird.

Aus diesem Grund ist es wünschenswert formaldehydfreie Klebstoffe bzw. Bindemittel bei der Herstellung von Holzwerkstoffen einzusetzen. Mögliche Alternativen zu den formaldehydhaltigen Harzen basieren auf Isocyanaten, wie zum Beispiel polymeres Diphenylmethandiisocyanat (PMDI) oder proteinbasierten Klebstoffen. Diese alternativen Bindemittel weisen allerdings den Nachteil der begrenzten Verfügbarkeit und hoher Preise auf.

Ein alternativer Ansatz zur Bereitstellung von formaldehydfreien Bindemitteln wird in der WO 2011/138 458 und der WO 2014/027 115 beschrieben. Hier wird ein Bindemittel vorgestellt, welches durch Reaktion von Kohlenhydraten mit Polyaminen hergestellt wird. Als Kohlenhydrate werden insbesondere Monosacharide wie Glukose, Fruktose und andere verwendet, die durch Umsetzung mit einem primären Polyamin gebildet werden. Das so gebildete Zucker-Amin-Polymer ist als Klebstoff einsetzbar. Die so hergestellten Kondensate sind allerdings nur bedingt wasserlöslich, wodurch sie für die Herstellung von Holzwerkstoffplatten nur schwer einsetzbar sind, da nahezu alle bekannten Bindemittel eine relativ gute Wasserlöslichkeit besitzen. Ein weiterer Nachteil der beschriebenen formaldehydfreien Zucker-Amin-Polymere ist deren relativ geringe Fähigkeit zur Vernetzung, wodurch nur ungenügend hohe Bindeeigenschaften erreicht werden.

Entsprechend ist derzeit ein kompletter Verzicht auf formaldehydhaltige Bindemittel wegen der mangelnden Verfügbarkeit alternativer Leime bzw. Harze nicht möglich. Ein weiteres Problem ergibt sich daraus, dass die bisher bekannten alternativen Bindemittel nicht für alle Anlagentechnologien bei der Herstellung von Holzwerkstoffen, insbesondere Holzwerkstoffplatten, einsetzbar sind. Bei der Verarbeitung von PMDI-Bindemitteln muss zum Beispiel durch aufwendige Anlagentechnologie in den kontinuierlichen Pressen ein geeignetes Trennmittel auf die Stahlbänder, die sich auf der Ober- und Unterseite der Presse befinden, aufgetragen werden.

Aufgrund der genannten Probleme von geeigneten alternativen Bindemitteln für faserhaltige Platten werden daher große Anstrengungen unternommen, die derzeit verwendeten formaldehydhaltigen Bindemittel bzw. Klebstoffe zu verbessern.

Ein möglicher Ansatz besteht z. B. in der Verringerung des Anteils von Formaldehyd im Klebstoff. Dies kann z.B. durch eine Verringerung des Molverhältnisses zwischen Formaldehyd und Harnstoff bzw. Harnstoff-Melamin erfolgen, da die Höhe der Emission des Formaldehyds in erheblicher Weise durch dieses Molverhältnis beeinflusst wird. Aus diesem Grunde wurde das Verhältnis zwischen Formaldehyd und Harnstoff bzw. Harnstoff-Melamin zunehmend in Richtung eines äquimolaren Verhältnisses (d. h. ein molares Verhältnis von 1 : 1) geführt. Nachteilig dabei ist allerdings, dass die Reaktivität der Bindemittel bzw. Klebstoffe reduziert wird, so dass der Anteil an Bindemittel in den Holzwerkstoffen erhöht werden muss, um eine benötigte Plattenfestigkeit zu erreichen. Entsprechend besteht der Nachteil dieses Ansatzes darin, dass die Leime bzw. Bindemittel langsamer werden und die Menge der Beleimung erhöht werden muss, was wiederum mit erhöhten Kosten verbunden ist.

Eine weitere Möglichkeit zur Reduzierung des Formaldehydgehaltes in den Bindemitteln besteht zum anderen in der Zugabe von Formaldehydfängern, die allerdings Mehrkosten verursachen und die Produkteigenschaften nachteilig beeinflussen können. Diese Formaldehydfänger sind typischerweise Verbindungen, die mit Formaldehyd reagieren können und somit einen Teil des während des Verarbeitungsvorganges, insbesondere während des Pressvorganges, freigesetzten Formaldehyds in der Platte binden. Bekannte Formaldehydfänger sind z. B. Harnstoff oder Bisulfit. Ein Nachteil der Verwendung von Formaldehydfängern besteht allerdings darin, dass durch deren Zugabe die Reaktivität des Leimes bzw. Bindemittels teilweise gesenkt wird, bzw. dass durch die verwendeten Formaldehydfänger Stoffe in die Holzwerkstoffplatten gelangen, die in der Nutzung der Platten oder deren Entsorgung kritisch einzustufen sind. So ist es z. B. bekannt, dass Holzwerkstoffplatten, die eine erhöhte Salzmenge enthalten, häufig eine höhere Ausgleichsfeuchte besitzen und damit bei klimatischen Änderungen größeren Dimensionsänderungen unterworfen sind. Entsprechend können die Nachteile der Verwendung von Formaldehydfängern wie folgt zusammengefasst werden: Zusätzliche Formaldehydfänger verursachen höhere Kosten, die Zugabe von Formaldehydfängern erfordert eine Anpassung der Verarbeitungstechnologie, erhöhte Dimensionsänderungen der mit Formaldehydfängern hergestellten Holzwerkstoffplatten.

Entsprechend ist der Bedarf an Klebstoffen hoch, die eine geringe Emission von Formaldehyd aufweisen, aber gleichzeitig in einfacher Weise in die bestehenden Fertigungsanlagen und Fertigungstechnologien eingebaut werden können, ohne nachteilig auf mit dem Bindemittel hergestellten Holzwerkstoffplatten zu wirken.

So wurden weitere alternative Ansätze für Bindemittelsystem entwickelt.

DE 3 943 488 beschreibt die Verwendung von binären Reaktionsgemischen aus festem Harnstoff und Mono- und Disacchariden, wobei der Zucker jeweils im Unterschuss und Harnstoff als Amid im Überschuss verwendet werden. Die in dieser Reaktion gebildeten Carbamate können eine Reaktion mit Formaldehyd eingehen und entsprechend als Formaldehydfänger fungieren.

Die US 4,339,361 beschreibt ein Phenol-Formaldehyd-Harz als Bindemittel, welches aus Phenol, Formaldehyd, einem Amid und einem Zucker hergestellt wird. Die Verfahrensschritte zielen darauf ab, dass zunächst ein Phenol-Formaldehyd-Harz ausgebildet wird, zu welchem Zucker und Amid zugegeben werden können.

GB 2 191 207 A betrifft einen Ersatzstoff für Amin-Phenol-Harze, der aus einer wässrigen Lösung aus einem Aldehyd mit einem Amid und einem Zucker oder Zuckerderivat bestehen kann.

Aus der US 1,949,831 ist eine Umsetzung eines Zuckers mit einem Aldehyd und anschließender Zugabe von Harnstoff bekannt.

Es besteht allerdings nach wie vor ein sehr großer Bedarf an Klebstoffen, die hinsichtlich der Emission von Formaldehyd optimiert sind. Der vorliegenden Erfindung liegt daher die technische Aufgabe zugrunde, einen Klebstoff bzw. eine Bindemittelzusammensetzung bereitzustellen, die eine geringere Formaldehydemission aufweist, und zudem sowohl in üblicher Weise verarbeitbar ist als auch zu vergleichbar guten technologischen Produktparametern führt.

Die gestellte Aufgabe wird durch eine Bindemittelzusammensetzung mit den Merkmalen des Anspruchs 1 sowie durch ein Verfahren zur Herstellung der Bindemittelzusammensetzung gemäß Anspruch 12 gelöst.

Entsprechend wird gemäß der vorliegenden Erfindung eine Bindemittelzusammensetzung, insbesondere für faserhaltige Platten, bereitgestellt, die in einem mehrstufigen Verfahren herstellbar ist. Das mehrstufige Verfahren zur Herstellung der erfindungsgemäßen Bindemittelzusammensetzung umfasst dabei die folgenden Schritte:
a) Reaktion von mindestens einem Mono- und/oder Disaccharid mit mindestens einem Amid der allgemeinen Formel R¹-CONH₂, wobei
   - R¹ Alkoxy, Carboxy, substituiertes und nicht-substituiertes Amino, Aryloxy, Acyloxy, Alkylcarbonyl, substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, ist, wobei das Gewichtsverhältnis von dem mindestens einen Mono- oder Disaccharid und dem mindestens einen Amid 3:1 bis 1:1; und
b) Zugabe von mindestens einem Aldehyd oder mindestens einem Aldehyd-Äquivalent zu der Mischung aus Schritt a).

Im ersten Reaktionsschritt a) kommt es durch die Reaktion von einem Mono- und/oder Disaccharid mit dem mindestens einen Amid zur Ausbildung eines Vorkondensates bzw. Vorproduktes, welches wasserlöslich ist und einen Wassergehalt von 20 bis 60 Gew% Wasser, bevorzugt 30 bis 50 Gew% Wasser aufweist. Dieses Vorprodukt bzw. Vorkondensat weist eine hohe Lagerstabilität auf und kann aufgrund der verwendeten Reaktionskomponenten (Zucker und z. B. Harnstoff als Amid) ungefährlich gelagert werden.

Das in im Verfahrensschritt a) gebildete Vorkondensat ist dünnflüssig und weist daher eine geringe Viskosität auf. Die Dünnflüssigkeit bzw. Fließfähigkeit als ein Äquivalent oder Maß für die Viskosität kann anhand der Auslaufdauer aus einem Auslaufbecher nach DIN 53 211 (Düse 4 mm, 20°C) bestimmt werden. Die Auslaufdauer für das in Schritt a) gebildete Vorkondensat beträgt vorliegend zwischen 10 und 20 s, bevorzugt zwischen 12 und 18 s, insbesondere bevorzugt zwischen 14 und 16 s.

In einer Ausführungsform der vorliegenden Bindemittelzusammensetzung werden reduzierende Mono- und/oder Disaccharide verwendet. Unter reduzierenden Mono- oder Disacchariden sind im Sinne der vorliegenden Anmeldung solche Saccharide zu verstehen, die über mindestens eine Aldehydgruppe im linearen Zustand verfügen. Nicht reduzierende Saccharide hingegen verfügen über keine freien Aldehydgruppen. Ein Beispiel für ein nicht reduzierendes Disaccharid ist Saccharose, in welchem die beiden Monosaccharide Glukose und Fruktose unter neutralen und basischen Bedingungen über eine α,β-1,2- Glykosidische Bindung in Acetalform miteinander verbunden vorliegen. Allerdings ist unter sauren Bedingungen eine Spaltung der Saccharose in die reduzierenden Monosaccharide Glukose und Fructose möglich.

In einer bevorzugten Ausführungsform der vorliegenden Bindemittelzusammensetzung werden als Monosaccharide Pentosen und Hexosen verwendet. Pentosen und Hexosen sind dabei insbesondere ausgewählt aus der Gruppe enthaltend Arabinose, Ribose, Xylose, Glukose (Dextrose), Mannose, Galaktose und Fruktose. Die genannten Saccharide können sowohl in ihrer D- als auch in ihrer L-Form verwendet werden.

In einer weitergehenden Variante der vorliegenden Bindemittelzusammensetzung ist der Rest R¹ des verwendeten mindestens einen Amides ausgewählt aus der Gruppe enthaltend Alkoxy, Acryloxy, Acyloxy, substituiertes und nicht substituiertes Amino.

Der Rest R¹ ist vorteilhafterweise ausgewählt aus einer Gruppe enthaltend nicht-substituiertes Amino, substituiertes Carbamoyl -NHCO-R², wobei R² H, Alkyl, Alkenyl oder eine substituierte oder nicht-substituierte Amino-Gruppe sein kann, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy. Besonders bevorzugte R¹-Gruppen sind C₁₋₄ Alkoxygruppen, insbesondere Methoxy und Ethoxy, -NH₂, -NHCONH₂.

Der Rest R¹ kann auch ausgewählt sein aus einer Gruppe umfassend substituiertes und nicht-substituiertes C₁-C₂₀-Alkyl, insbesondere C₂-C₁₀-Alkyl, substituiertes und nicht-substituiertes C₂-C₆-Alkenyl, substituiertes und nicht-substituiertes C₃-C₈-Cycloalkyl und substituiertes und nicht-substituiertes C₃-C₈-Cycloalkenyl. Besonders bevorzugt ist der Rest R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl.

In einer besonders bevorzugten Ausführungsform ist das mindestens eine Amid ausgewählt aus der Gruppe enthaltend Harnstoff, Urethan (Carbamidsäureethylester), Biuret (Carbamoylharnstoff), Semicarbazide und Semicarbazone. Der Harnstoff kann auch in zyklischer Form vorliegen, insbesondere in Form der Cyanursäure (2,4,6-Trihydroxy-1,3,5-triazin).

Die Umsetzung eines Mono- bzw. Disaccharides mit einem Amid erfolgt im Sinne der Maillard-Reaktion, die für die Reaktion von reduzierendem Zucker mit einer Aminogruppe von Aminosäuren unter Braunfärbung (typisch für Koch- und Brataromen von Lebensmitteln) beschrieben worden ist. Dabei bildet sich im ersten Schritt der Reaktion ein Derivat eines N-Glycosylamins, aus welchem durch die so genannte Amadori-Umlagerung das Derivat einer Ketose entsteht. Dies ist beispielhaft in der folgenden schematischen Gleichung von Glucose als Monosaccharid und Harnstoff als Amid dargestellt.

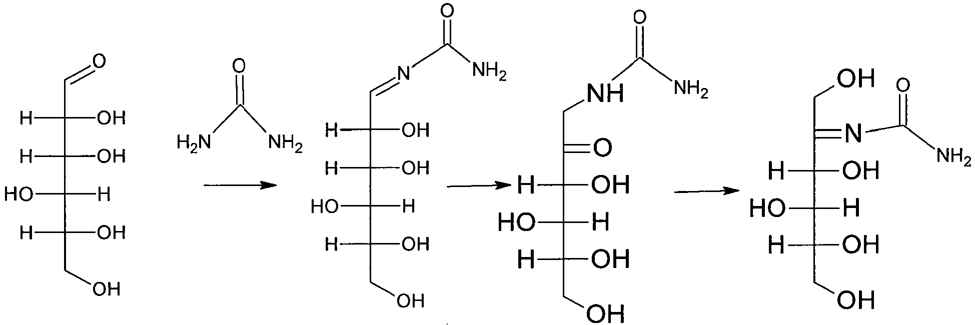

Wie auch im Falle der bekannten Maillard-Reaktion weist das in Schritt a) gebildete Vorkondensat aus Glukose und Harnstoff einen braunen bis rotbräunlichen Farbumschlag auf.

Das im Verfahrensschritt b) verwendete Aldehyd ist in einer Variante ein C1- bis C5-Aldehyd, bevorzugt ein C1- bis C3-Aldehyd, insbesondere bevorzugt Formaldehyd oder paraFormaldehyd. Neben der Verwendung von Formaldehyd ist auch die Verwendung von Acetaldehyd durchaus vorstellbar und vorteilhaft.

Es ist ebenfalls möglich, mindestens einen Aldehyd in Form eines geeigneten Reaktionsäquivalentes einzusetzen. So kann z.B. Hexamethylentetraamin als Formaldehydäquivalent eingesetzt werden.

Der Begriff "substituiert", in obiger Verwendung für R¹ und R² mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet bevorzugt einen Rest der Formel R-C≡C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet bevorzugt aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten substituiert sind.

Der Begriff "Cycloalkyl" umfasst bevorzugt die Gruppen Cyclopropyl, Cyclobutyl, Cyclopentyl, Cyclohexyl und Cycloheptyl.

Der Begriff "Cycloalkenyl" umfasst bevorzugt substituierte oder nicht-substituierte cyclische Gruppen wie Cyclopentenyl oder Cyclohexenyl. Auch werden vom dem Begriff "Cycloalkenyl" cyclische Gruppen mit konjugierten Doppelbindungen wie z.B Cyclohexadiene abgedeckt.

Der Begriff "Alkenyl" umfasst im Sinne der vorliegenden Anmeldungen Gruppen mit einer oder mehreren Doppelbindungen, wobei die Doppelbindungen auch in konjugierter Form vorliegen können, wie z.B. Butadiene.

In einer weiteren Variante der vorliegenden Bindemittelzusammensetzung beträgt das Gewichtsverhältnis von dem mindestens einen Mono- oder Disaccharid und dem mindestens einen Amid in Schritt a) 3:1 bis 1:1, bevorzugt 1:1.

Das Gewichtsverhältnis von dem mindestens einen in Schritt a) verwendeten Amid und dem in Schritt b) zugefügten mindestens einem Aldehyd liegt bei 1:2, bevorzugt bei 1:1,5, insbesondere bevorzugt bei 1:1.

Im Falle der Verwendung von Formaldehyd beträgt das Gewichtsverhältnis von Amid (zum Beispiel Harnstoff) zu Formaldehyd zwischen 1:1 und 1:1,3. Bezogen auf die Ausgangsverbindungen liegt somit der Anteil an Formaldehyd in der vorliegenden Bindemittelzusammensetzung bei ca. 10 bis 15%, anstatt, wie bei den herkömmlich verwendeten Harnstoff-Formaldehydleimen mit einem Formaldehydanteil von ca. 30 bis 35%.

Das in im Verfahrensschritt b) gebildete Produkt ist ebenfalls noch relativ dünnflüssig und weist eine Auslaufdauer als Viskositätsäquivalent zwischen 10 und 20 s , bevorzugt zwischen 12 und 18 s, insbesondere bevorzugt zwischen 14 und 16 s auf.

Aus diesem Grund wird in einer weiteren bevorzugten Ausführungsform der vorliegenden Bindemittelzusammensetzung in einem weiteren Schritt c) mindestens ein Verdickungsmittel zugegeben. Die Zugabe eines Verdickungsmittels ist vorteilhaft, um die Viskosität der Bindemittelzusammensetzung so einzustellen, dass ein Eindringen des Bindemittels in die Holzfasern bzw. Holzfaserplatte aufgrund einer zu hohen Dünnflüssigkeit bzw. zu niedriger Viskosität verhindert wird. Als Verdickungsmittel zur Viskositätseinstellung bieten sich natürliche Verdickungsmittel oder auch synthetische Verdickungsmittel an.

Als organische Verdickungsmittel können Stärke, Gelatine, Casein aber auch Mehle, wie zum Beispiel Weizenmehl, Roggenmehl, Guarkernmehl, Johannesbrotkernmehl verwendet werden. Bei der Verwendung von herkömmlichen Mehlen ist es auch möglich, biologisch verunreinigte Mehle zu verwenden, da aufgrund der späteren Verarbeitung der Holzwerkstoffe und der hohen Temperaturen während des Herstellungsprozesses der Holzwerkstoffplatten die biologische Verunreinigung, zum Beispiel in Form von schädigenden Mikroorganismen, entfernt wird.

Als weitere Verdickungsmittel können abgewandelte Naturstoffe, wie zum Beispiel Hydroxyethylcellulose, Carboxymethylcellulose, Hydroxypropylmethylcellulose, Hydroxpropylcellulose oder Ethylhydroxyethylcellulose eingesetzt werden. Synthetische Verdickungsmittel, wie Polyvinylalkohole, Polyacrylsäure, Polymetacrylsäure, Polyacrylamide, Polyvinylpyrolidone und Polyethylenglycole sind auch einsetzbar.

Das Verdickungsmittel kann in einer Menge von 3 bis 10 Gew%, bevorzugt 5 bis 10 Gew%, in Abhängigkeit vom gewünschten Viskositätsgrad der Bindemittelzusammensetzung zugegeben werden.

Die vorliegende Bindemittelzusammensetzung kann nicht nur für Flächenverklebungen, sondern auch zur Verklebung von Holzpartikeln, wie Spänen, Strands oder Fasern eingesetzt werden. Entsprechend wird die vorliegende Bindemittelzusammensetzung bevorzugt als Bindemittel für faserhaltige Platten, insbesondere für Holzfaserplatten, Holzspanplatten, Gipsfaserplatten oder auch Zementfaserplatten verwendet. Auch ist die Verwendung der vorliegenden Bindemittelzusammensetzung als Klebstoff für die Sperrholz-, Brettschichtholz- oder Furnierschichtholz-Fertigung (laminated veneer lumber, LVL) möglich.

Die vorliegende Bindemittelzusammensetzung wird in einem Verfahren hergestellt, welches die folgenden Schritte umfasst:
a) Vermischen von mindestens einem Mono- und/oder Disaccharid mit mindestens einem Amid der allgemeinen Formel R¹-CONH₂, wobei R¹ die obige Bedeutung hat, und
b) Zugabe von mindestens einem Aldehyd oder mindestens einem Aldehyd-Äquivalent zu der Mischung aus Schritt a).

In einer Variante des vorliegenden Verfahrens wird der Schritt a) des Vermischens von mindestens einem Mono- und/oder Disaccharid mit mindestens einem Amid der allgemeinen Formel R¹-CONH₂ bei einem pH-Wert zwischen 3 und 6, bevorzugt zwischen 4 und 5 und einer Temperatur zwischen 20°C und 120°C, bevorzugt zwischen 40°C und 100°C, durchgeführt. Die Durchführung des Schritts a) unter sauren Bedingungen bedingt zum einen, dass die zyklischen Formen der verwendeten Saccharide in die entsprechenden linearen Formen überführt werden, wodurch die Reaktion der Saccharide mit dem Amid begünstigt wird. Auch werden Disaccharide in einem sauren Milieu in die entsprechenden Monosaccharide gespalten und können anschließend mit dem Amid, wie zum Beispiel Harnstoff, zur Reaktion gebracht werden.

In einer weiteren Variante des vorliegenden Verfahrens wird Schritt b) der Zugabe von mindestens einem Aldehyd oder mindestens einem Aldehyd-Äquivalent bei einem pH-Wert zwischen 5 und 8, bevorzugt zwischen 6 und 7 unter einer Temperatur zwischen 20°C und 80°C, bevorzugt zwischen 40°C und 70°C, durchgeführt.

Es ist weiterhin bevorzugt, dass in einem weiteren Schritt c) das mindestens eine Verdickungsmittel zugegeben wird. Zur Art und Menge des zugegebenen Verdickungsmittels wird auf die obigen Ausführungen verwiesen.

Die erfindungsgemäße Bindemittelzusammensetzung und das entsprechende Verfahren zu deren Herstellung weist eine Vielzahl von Vorteilen auf. So sind die zum Einsatz kommenden Rohstoffe in beliebiger Menge verfügbar. Eine aufwändige Prozessanpassung wird insbesondere durch die Einstellung der Viskosität der Bindemittelzusammensetzung durch Zugabe eines geeigneten Verdickungsmittels vermieden. Aufgrund der reduzierten Menge des in Verfahrensschritt b), das heißt in der zweiten Verfahrensstufe, zugegebenen Aldehydes wird ebenfalls die Aldehydemission reduziert. Insbesondere erfolgt aufgrund des molaren Überschusses an in Schritt a) zugegebenem Amid ein vollständiger Umsatz des Aldehyds in der zweiten Verfahrensstufe. Es wird somit ein sicherer und vollständiger Umsatz des Aldehyds, wie zum Beispiel des Formaldehyds, ermöglicht.

Ein weiterer wesentlicher Vorteil der vorliegenden Bindemittelzusammensetzung und des entsprechenden Herstellungsverfahrens besteht in der Zweistufigkeit des Herstellungsprozesses und somit in der Möglichkeit der Bereitstellung eines separaten, in Schritt a) hergestellten Vorkondensates bzw. Vorproduktes, welches lagerstabil ist und ungefährlich gelagert werden kann. Im Gegensatz dazu ist bei den herkömmlichen Formaldehydbindemitteln eine zeitnahe Verarbeitung notwendig, um eine ausreichende Reaktivität des formaldehydhaltigen Bindemittels zu gewährleisten. Die erfindungsgemäß hergestellte Bindemittelzusammensetzung enthält zwar noch Formaldehyd, weist aber durch die Verwendung von weiteren Komponenten einen prozentual deutlich niedrigeren Formaldehydanteil auf.

Die Erfindung wird nachfolgend anhand mehrerer Ausführungsbeispiele näher erläutert.

### Ausführungsbeispiel 1:

In einem Rundkolben werden 450 g Fructose und 500 ml Wasser mit 1 ml Schwefelsäure (10%) unter Rühren langsam erhitzt. Wenn die Lösung 60°C erreicht hat, werden 258 g Biuret zugeben. Es wird weiter unter Rühren zum Sieden erhitzt.

Dabei verfärbt sich die Lösung langsam ins rötlichbraune. Der Fortschritt der Reaktion wurde über Dünnschichtchromatographie (DC) verfolgt (Laufmittel: Ethanol). Der Harnstoff wurde nach dem DC durch Besprühen mit einer Lösung von 0,3% p-Dimethylaminozimtaldehyd in Ethanol und halbkonzenrierter Salzsäure (5/2 V/V) durch die rötliche Färbung des entstehenden Farbstoffes nachgewiesen. Das Reaktionsprodukt war bei Betrachtung unter einer UV-Lampe bei Wellenlängen von 254 und 366 nm als hellleuchtender, gelber Fleck erkennbar. Die Temperatur wurde, nachdem nahezu kein Harnstoff mehr nachweisbar war, auf ca. 65° C abgesenkt.

Die Struktur des isolierten Hauptproduktes wurde mittels 1 H-NMR Spektroskopie ermittelt: 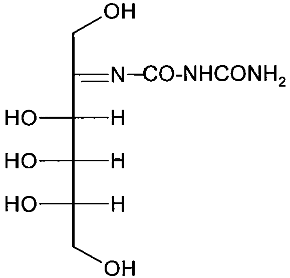 ¹H NMR (200 MHz, D2O, 30°C): *δ* = 8.7 (s, 1 H, 1-NH), 6.7 (s, 2H, -NH2), 5- 3.2 (CH, COH) ppm

Der pH-Wert wurde durch Zugabe von wenig Natronlauge auf 7,5 eingestellt. Anschließend wurden 195 g einer Formaldehydlösung (37 Gew.%) zugegeben und noch ca. 20 min bei 65°C weitergerührt und dann abgekühlt.

Der resultierende Leim wurde mit 3% eines Andickers (Guarankernmehl) zur Flächenverklebung von HDF einsetzt (Klebstoffmenge: 100 g/m² (fest)). Nach dem Aushärten des Leimes war bei einem Aufstechversuch ein Kohäsionsbruch im Fügeteil beobachtbar. Als Referenz wurde ein Kauritleim mitgeprüft, der im Aufstechversuch ein ähnliches Ergebnis lieferte.

### Ausführungsbeispiel 2:

In einem Rundkolben werden unter Rühren 450 g Glucose, 150 g Harnstoff in 500 ml Wasser mit 0,5 ml Schwefelsäure (10 Gew.%) unter Rühren und gleichzeitigem Erwärmen aufgelöst. Das Gemisch wird weiter unter Rühren zum Sieden erhitzt. Dabei verfärbt sich die Lösung langsam ins rötlichbraune.

Der Fortschritt der Reaktion wurde über Dünnschichtchromatographie (DC) verfolgt (Laufmittel: Ethanol). Die Reaktion wurde solange fortgeführt bis im DC kein Harnstoff mehr erkennbar war. Der Harnstoff wurde nach dem DC durch Besprühen mit einer Lösung von 0,3% p-Dimethylamino- zimtaldehyd in Ethanol und halbkonzentrierter Salzsäure (5/2 V/V) als rote Färbung sichtbar gemacht. Das Reaktionsprodukt war bei Betrachtung unter einer UV-Lampe bei Wellenlängen von 254 und 366 nm als hellleuchtender, gelber Fleck erkennbar.

Die Temperatur wurde, nach dem nahezu kein Harnstoff mehr nachweisbar war, auf ca. 65° C abgesenkt.

Anschließend wurden 58,3 g Hexamethylentetramin zugegeben, noch ca. 20 min bei 65°C weitergerührt und dann abgekühlt.

Der resultierende Leim wurde mit 5% eines Andickers (Weizenmehl) zur Flächenverklebung von HDF einsetzt (Klebstoffmenge: 100 g/m² (fest)). Nach dem Aushärten des Leimes war bei einem Aufstechversuch ein Kohäsionsbruch im Fügeteil beobachtbar. Als Referenz wurde ein Kauritleim mitgeprüft, der im Aufstechversuch ein ähnliches Ergebnis lieferte.

### Ausführungsbeispiel 3: Bestimmen der Viskosität in Form der Auslaufdauer

Als Heizquelle wurde für diesen Versuch ein Ölbad genommen und die Lösung wurde unter Rückfluss gekocht.

In einer 3-Halsrührapparatur wurden zu 60mL dest. Wasser 86g Fructose gegeben und bei 50,0°C gelöst. Der pH-Wert lag bei 6,82. Zu der Lösung wurde 1 Tropfen Schwefelsäure gegeben (5ml konz. Schwefelsäure mit 50mL Wasser verdünnt). Die Temperatur lag bei 50,0°C und der pH-Wert lag bei 2,40 Die Lösung wurde für 10 Min gerührt und anschließend wurden 34g Harnstoff zugegeben.

| Rührzeit (h) | Temperatur (°C) | pH-Wert |
|---|---|---|
| 0:30 | 107,0 | 7,40 |
| 1:00 | 106,0 | 7,17 |
| 1:30 | 105,0 | 7,03 |
| 2:00 | 105,0 | 6,90 |
| 2:30 | 105,0 | 6,87 |

Nach 0:30 Stunden begann die Lösung zu sieden und wurde erst orange und dann dunkelbraun.

Die Lösung wurde auf 20,0°C abgekühlt, um die Viskosität zu messen. (Stufe 1)

Anschließend wurde die Probe auf 60,0°C erhitzt und dann mit 46,2g 37%ige FormaldehydLösung (0,57 mol) 1 Stunde rühren gelassen. Danach wurde die Probe auf 20,0°C abgekühlt und die Viskosität erneut gemessen. (Stufe 2)

Zum Vergleich wurde die Viskosität des Leims DL7112 gemessen.

| Probe | Leim DL7112 | Stufe 1 (Vorkondensat) | Stufe 2 |
|---|---|---|---|
| Temperatur (°C) | 20,0 | 20,0 | 20,0 |
| pH-Wert | 7,44 | 7,89 | 4,60 |
| Viskosität (s) | 63 | 14 | 16 |

Die Viskosität wurde mit einem Auslaufbecher (4mm) nach DIN 53 211 bestimmt. Der pH-Wert wurde mit dem Knick pH-Meter Portamess 911pH bestimmt.

## Patentansprüche

1. Bindemittelzusammensetzung, insbesondere für faserhaltige Platten, herstellbar in einem Verfahren umfassend die Schritte
a) Reaktion von mindestens einem Mono- und/oder Disaccharid mit mindestens einem Amid der allgemeinen Formel R¹-CONH₂, wobei
- R¹ Alkoxy, Carboxy, substituiertes und nicht-substituiertes Amino, Aryloxy, Acyloxy, Alkylcarbonyl, substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, ist, wobei das Gewichtsverhältnis von dem mindestens einen Mono- oder Disaccharid und dem mindestens einen Amid 3:1 bis 1:1; und
b) Zugabe von mindestens einem Aldehyd oder mindestens einem Aldehyd-Äquivalent zu der Mischung aus Schritt a).

2. Bindemittelzusammensetzung nach Anspruch 1, **dadurch gekennzeichnet, dass** reduzierende Mono- und/oder Disaccharide verwendet werden.

3. Bindemittelzusammensetzung nach Anspruch 1 oder 2, **dadurch gekennzeichnet, dass** als Monosaccharide Pentosen und Hexosen, insbesondere ausgewählt aus der Gruppe enthaltend Arabinose, Ribose, Xylose, Glucose (Dextrose), Mannose, Galactose und Fructose verwendet werden.

4. Bindemittelzusammensetzung nach einem der vorhergehenden Ansprüche, **dadurch gekennzeichnet, dass** R¹ ausgewählt ist aus der Gruppe enthaltend, Alkoxy, Aryloxy, Acyloxy, substituiertes und nicht-substituiertes Amino ist.

5. Bindemittelzusammensetzung nach einem der vorhergehenden Ansprüche, **dadurch gekennzeichnet, dass** das mindestens eine Amid ausgewählt aus der Gruppe enthaltend Harnstoff, Urethan (Carbamidsäureethylester), Biuret (Carbamoylharnstoff), und davon abgeleitete Semicarbazide und Semicarbazone.

6. Bindemittelzusammensetzung nach einem der vorhergehenden Ansprüche, **dadurch gekennzeichnet, dass** der mindestens eine Aldehyd ein C1-C5 Aldehyd, bevorzugt ein C1-C3 Aldehyd, ganz besonders bevorzugt Formaldehyd ist.

7. Bindemittelzusammensetzung nach einem der vorhergehenden Ansprüche, **dadurch gekennzeichnet, dass** das Gewichtsverhältnis von dem mindestens einen Mono- oder Disaccharid und dem mindestens einen Amid in Schritt a) 1: 1 beträgt.

8. Bindemittelzusammensetzung nach einem der vorhergehenden Ansprüche, **dadurch gekennzeichnet, dass** das Gewichtsverhältnis von dem mindestens einen Amid und dem mindestens einen Aldehyd 1 : 2, bevorzugt 1 : 1,5, insbesondere bevorzugt 1 : 1 beträgt.

9. Bindemittelzusammensetzung nach einem der vorhergehenden Ansprüche, in einem weiteren Schritt c) mindestens ein Verdickungsmittel zugegeben wird.

10. Bindemittelzusammensetzung nach Anspruch 9, **dadurch gekennzeichnet, dass** das mindestens eine Verdickungsmittel in einer Menge von 3 bis 10 Gew%, bevorzugt 5 bis 10 Gew% zugegeben wird.

11. Verwendung einer Bindemittelzusammensetzung nach einem der vorhergehenden Ansprüche als Bindemittel für faserhaltige Platten, insbesondere für Holzfaserplatten, Holzspanplatten, Gipsfaserplatten, Zementfaserplatten.

12. Verfahren zur Herstellung einer Bindemittelzusammensetzung nach einem der Ansprüche 1 bis 10 umfassend die Schritte:
a) Vermischen von mindestens einem Mono- und/oder Disaccharid mit mindestens einem Amid der allgemeinen Formel R¹-CONH₂, wobei R¹ die obige Bedeutung hat,
b) Zugabe von mindestens einem Aldehyd oder mindestens einem Aldehyd-Äquivalent zu der Mischung aus Schritt a).

13. Verfahren nach Anspruch 12, **dadurch gekennzeichnet, dass** der Schritt a) des Vermischens von mindestens einem Mono- und/oder Disaccharid mit mindestens einem Amid der allgemeinen Formel R¹-CONH₂ bei einem pH-Wert zwischen 3 und 6, bevorzugt zwischen 4 und 5 und einer Temperatur zwischen 20°C und 120°C, bevorzugt 40°C und 100°C durchgeführt wird.

14. Verfahren nach Anspruch 12 oder 13, **dadurch gekennzeichnet, dass** der Schritt b) der Zugabe von mindestens einem Aldehyd oder mindestens einem Aldehyd-Äquivalent bei einem pH-Wert zwischen 5 und 8, bevorzugt zwischen 6 und 7 und einer Temperatur zwischen 20°C und 80°C, bevorzugt 40°C und 70°C durchgeführt wird.

15. Verfahren nach einem der Ansprüche 12 bis 14, **dadurch gekennzeichnet, dass** in einem weiteren Schritt c) mindestens ein Verdickungsmittel zugegeben wird.

## Claims

1. Binder composition, in particular for fibre-containing boards, which can be produced in a process comprising the following steps:
a) reaction of at least one mono- and/or disaccharide with at least one amide of the general formula R¹-CONH₂, where
- R¹ is alkoxy, carboxy, substituted or unsubstituted amino, aryloxy, acyloxy, alkylcarbonyl, substituted or unsubstituted alkyl, substituted or unsubstituted aryl, substituted or unsubstituted alkenyl, substituted or unsubstituted alkynyl, substituted or unsubstituted cycloalkyl, substituted or unsubstituted cycloalkenyl, which can have interruption by -0- or by -NH-, where the ratio by weight of the at least one mono- or disaccharide to the at least one amide is from 3:1 to 1:1; and
b) addition of at least one aldehyde or at least one aldehyde equivalent to the mixture from step a).

2. Binder composition according to Claim 1, **characterized in that** reducing mono- and/or disaccharides are used.

3. Binder composition according to Claim 1 or 2, **characterized in that** monosaccharides used are pentoses and hexoses, in particular selected from the group comprising arabinose, ribose, xylose, glucose (dextrose), mannose, galactose and fructose.

4. Binder composition according to any of the preceding claims, **characterized in that** R¹ is selected from the group comprising alkoxy, aryloxy, acyloxy and substituted and unsubstituted amino.

5. Binder composition according to any of the preceding claims, **characterized in that** the at least one amide is selected from the group comprising urea, urethane (ethyl carbamate), biuret (carbamoylurea) and their semicarbazide and semicarbazone derivatives.

6. Binder composition according to any of the preceding claims, **characterized in that** the at least one aldehyde is a C1-C5 aldehyde, preferably a C1-C3 aldehyde, very particularly preferably formaldehyde.

7. Binder composition according to any of the preceding claims, **characterized in that** the ratio by weight of the at least one mono- or disaccharide to the at least one amide in step a) is 1:1.

8. Binder composition according to any of the preceding claims, **characterized in that** the ratio by weight of the at least one amide to the at least one aldehyde is 1:2, preferably 1:1.5, with particular preference 1:1.

9. Binder composition according to any of the preceding claims **characterized in that** at least one thickener is added in a further step c).

10. Binder composition according to Claim 9, **characterized in that** the quantity added of the at least one thickener is from 3 to 10% by weight, preferably from 5 to 10% by weight.

11. Use of a binder composition according to any of the preceding claims as binder for fibre-containing boards, in particular for wood fibreboard, wood chipboard, gypsum fibreboard or cement fibreboard.

12. Process for the production of a binder composition according to any of Claims 1 to 10 comprising the following steps:
a) mixing of at least one mono- and/or disaccharide with at least one amide of the general formula R¹-CONH₂, where R¹ is as defined above,
b) addition of at least one aldehyde or of at least one aldehyde equivalent to the mixture from step a).

13. Process according to Claim 12, **characterized in that** the step a) of the mixing of at least one mono- and/or disaccharide with at least one amide of the general formula R¹-CONH₂ is carried out at a pH of from 3 to 6, preferably from 4 to 5, and at a temperature of from 20°C to 120°C, preferably from 40°C to 100°C.

14. Process according to Claim 12 or 13, **characterized in that** the step b) of the addition of at least one aldehyde or of at least one aldehyde equivalent is carried out at a pH of from 5 to 8, preferably from 6 to 7, and at a temperature of from 20°C to 80°C, preferably from 40°C to 70°C.

15. Process according to any of Claims 12 to 14, **characterized in that** at least one thickener is added in a further step c).

## Revendications

1. Composition de liant, en particulier pour des plaques contenant des fibres, pouvant être préparée dans un procédé comprenant les étapes
a) réaction d'au moins un monosaccharide et/ou disaccharide avec au moins un amide de formule générale R¹-CONH₂, dans laquelle
- R¹ représente alcoxy, carboxy, amino substitué et non substitué, aryloxy, acyloxy, alkylcarbonyle, alkyle substitué et non substitué, aryle substitué et non substitué, alcényle substitué et non substitué, alcynyle substitué et non substitué, cycloalkyle substitué et non substitué, cycloalcényle substitué et non substitué, qui peuvent être interrompus par -0- ou -NH-, le rapport pondéral dudit au moins un monosaccharide ou disaccharide et dudit au moins un amide étant de 3:1 à 1:1 ; et
b) addition d'au moins un aldéhyde ou d'au moins un équivalent d'aldéhyde au mélange de l'étape a).

2. Composition de liant selon la revendication 1, **caractérisée en ce qu'**on utilise des monosaccharides et/ou des disaccharides réducteurs.

3. Composition de liant selon la revendication 1 ou 2, **caractérisée en ce qu'**on utilise, comme monosaccharides, des pentoses et des hexoses, en particulier choisis dans le groupe contenant l'arabinose, le ribose, le xylose, le glucose (dextrose), le mannose, le galactose et le fructose.

4. Composition de liant selon l'une quelconque des revendications précédentes, **caractérisée en ce que** R¹ est choisi dans le groupe contenant alcoxy, aryloxy, acyloxy, amino substitué et non substitué.

5. Composition de liant selon l'une quelconque des revendications précédentes, **caractérisée en ce que** ledit au moins un amide est choisi dans le groupe contenant l'urée, l'uréthane, (ester éthylique de l'acide carbamique), le biuret (carbamoylurée) et les semi-carbazides et les semi-carbazones dérivés de ceux-ci.

6. Composition de liant selon l'une quelconque des revendications précédentes, **caractérisée en ce que** ledit au moins un aldéhyde est un aldéhyde en C₁-C₅, de préférence un aldéhyde en C₁-C₃, de manière tout particulièrement préférée le formaldéhyde.

7. Composition de liant selon l'une quelconque des revendications précédentes, **caractérisée en ce que** le rapport pondéral dudit au moins un monosaccharide ou disaccharide et dudit au moins un amide dans l'étape a) est de 1:1.

8. Composition de liant selon l'une quelconque des revendications précédentes, **caractérisée en ce que** le rapport pondéral dudit au moins un amide et dudit au moins un aldéhyde est de 1:2, de préférence de 1:1,5, en particulier de préférence de 1:1.

9. Composition de liant selon l'une quelconque des revendications précédentes, **caractérisée en ce qu'**au moins un épaississant est ajouté dans une autre étape c).

10. Composition de liant selon la revendication 9, **caractérisée en ce que** ledit au moins un épaississant est ajouté en une quantité de 3 à 10% en poids, de préférence de 5 à 10% en poids.

11. Utilisation d'une composition de liant selon l'une quelconque des revendications précédentes comme liant pour des plaques contenant des fibres, en particulier pour des plaques de fibres de bois, des plaques de copeaux de bois, des plaques de fibres à base de plâtre, des plaques de fibres à base de ciment.

12. Procédé pour la préparation d'une composition de liant selon l'une quelconque des revendications 1 à 10, comprenant les étapes :
a) mélange d'au moins un monosaccharide et/ou disaccharide avec au moins un amide de formule générale R¹-CONH₂, R¹ présentant la signification ci-dessus,
b) addition d'au moins un aldéhyde ou d'au moins un équivalent d'aldéhyde au mélange de l'étape a).

13. Procédé selon la revendication 12, **caractérisé en ce que** l'étape a) du mélange d'au moins un monosaccharide et/ou disaccharide avec au moins un amide de formule générale R¹-CONH₂ est réalisée à un pH entre 3 et 6, de préférence entre 4 et 5 et à une température entre 20°C et 120°C, de préférence entre 40°C et 100°C.

14. Procédé selon la revendication 12 ou 13, **caractérisé en ce que** l'étape b) de l'addition d'au moins un aldéhyde ou d'au moins un équivalent d'aldéhyde est réalisée à un pH entre 5 et 8, de préférence entre 6 et 7 et à une température entre 20°C et 80°C, de préférence entre 40°C et 70°C.

15. Procédé selon l'une quelconque des revendications 12 à 14, **caractérisé en ce qu'**au moins un épaississant est ajouté dans une autre étape c).
